# EUROPEAN PATENT APPLICATION

(11) **EP 4 496 185 A1**
(43) Date of publication of application: **22.01.2025**
(21) Application number: 23781111.2
(22) Date of filing: 31.03.2023
(51) Int. Cl.: H02K 1/22, H02K 19/10

(54) **ROTOR, MOTOR, COMPRESSOR, AND REFRIGERATION UNIT**

(30) Priority: 31.03.2022 JP 2022060436
(71) Applicant: DAIKIN INDUSTRIES, LTD., Osaka-shi, Osaka 530-0001 (JP); National University Corporation Okayama University, Kita-ku, Okayama-shi, Okayama 700-8530 (JP)
(72) Inventor: FU, Yuu, Osaka-shi, Osaka 530-0001 (JP); IRINO, Yusuke, Osaka-shi, Osaka 530-0001 (JP); TONARI, Tatsuya, Osaka-shi, Osaka 530-0001 (JP); SAKURAGI, Takuya, Osaka-shi, Osaka 530-0001 (JP); TAKEMOTO, Masatsugu, Okayama-shi, Okayama 700-8530 (JP)
(74) Representative: Hoffmann Eitle
(86) International application number: PCT/JP2023/013719
(87) International publication number: WO 2023/191103

(57) **Abstract**

A central surface section (31) of a radially inner wall surface (30) of the cavity section (21) is recessed with respect to a rotation center (Q) of the rotor core (11), where the central surface section (31) includes a vicinity of a first reference line (L1) that bisects an angle between two lines, one of which connects the rotation center (Q) of the rotor core (11) and one of circumferential ends of the cavity section (21), and another one of which connects the rotation center (Q) of the rotor core (11) and another one of the circumferential ends of the cavity section (21). A side surface section (32) of the radially inner wall surface (30) of the cavity section (21) is raised toward an intersection (X) between a second reference line (L2) and a wall surface of the shaft hole (15), where the side surface section (32) extends from the central surface section (31) to the circumferential end of the cavity section (21), where the second reference line (L2) forms an angle with the first reference line (L1), and where the angle is obtained by dividing 180° by the number of magnetic poles of the rotor core (11).

## Description

### TECHNICAL FIELD

The present disclosure relates to a rotor, a motor, a compressor, and a refrigeration apparatus.

### BACKGROUND ART

Patent Document 1 discloses a synchronous reluctance motor. The rotor core of this motor has a plurality of slits for each magnetic pole of the rotor core. The slit is an arc-shaped opening that is raised toward the center of the cylinder of the rotor core and that has a vertex on the q-axis.

### CITATION LIST

### PATENT DOCUMENT

Patent Document 1: WO 2019/082518

### SUMMARY OF THE INVENTION

### TECHNICAL PROBLEMS

In the motor of Patent Document 1, the q-axis magnetic flux easily passes through a part of the rotor core that is radially inward of the radially innermost one of the slits (cavity sections), and thus it is thus difficult to reduce the q-axis inductance. Accordingly, it is difficult to increase the reluctance torque.

### SOLUTION TO THE PROBLEMS

A first aspect of the present disclosure is directed to a rotor. The rotor includes: a rotor core (11) that has a shaft hole (15) and that has a cavity section (21) provided for each magnetic pole and having a cavity, wherein a central surface section (31) of a radially inner wall surface (30) of the cavity section (21) is recessed with respect to a rotation center (Q) of the rotor core (11), where the central surface section (31) includes a vicinity of a first reference line (L1) that bisects an angle between two lines, one of which connects the rotation center (Q) of the rotor core (11) and one of circumferential ends of the cavity section (21), and another one of which connects the rotation center (Q) of the rotor core (11) and another one of the circumferential ends of the cavity section (21), and a side surface section (32) of the radially inner wall surface (30) of the cavity section (21) is raised toward an intersection (X) between a second reference line (L2) and a wall surface of the shaft hole (15), where the side surface section (32) extends from the central surface section (31) to the circumferential end of the cavity section (21), where the second reference line (L2) is a reference line extending in a radial direction from the rotation center (Q) of the rotor core (11) and forms an angle with the first reference line (L1), and where the angle is obtained by dividing 180° by the number of magnetic poles of the rotor core (11).

According to the first aspect, the radially inner wall surface (30) of the cavity section (21) can be closer to the wall surface of the shaft hole (15) and the second reference line (L2) than if the radially inner wall surface (30) of the cavity section (21) is formed in an arc shape raised toward the rotation center (Q) of the rotor core (11). Thus, the portion of the rotor core (11) that is radially inward of the cavity section (21) can be reduced. Accordingly, the q-axis magnetic flux is less likely to pass through the portion of the rotor core (11) that is radially inward of the cavity section (21), and thus the q-axis inductance can be reduced. As a result, the reluctance torque can be increased.

A second aspect of the present disclosure is directed to the rotor of the first aspect. In the second aspect, a radially outer wall surface (40) of the cavity section (21) is formed in an arc shape raised toward the rotation center (Q) of the rotor core (11), and the radially inner wall surface (30) of the cavity section (21) includes a portion in which a cavity width (W1), a distance between the radially inner wall surface (30) and the radially outer wall surface (40) of the cavity section (21), is longer than the cavity width (W1) at the vicinity of the first reference line (L1) of the radially inner wall surface (30) of the cavity section (21).

According to the second aspect, by the radially outer wall surface (40) of the cavity section (21) being formed in the arc shape raised toward the rotation center (Q) of the rotor core (11), the magnetic path of the d-axis magnetic flux can be easily secured in the portion of the rotor core (11) that is radially outside the cavity section (21). Accordingly, decrease in the d-axis inductance can be reduced, and thus decrease in the reluctance torque can be reduced.

A third aspect of the present disclosure is directed to the rotor of the first or second aspect. In the third aspect, the central surface section (31) of the radially inner wall surface (30) of the cavity section (21) includes a portion having a center of curvature that is radially inward of the radially inner wall surface (30) of the cavity section (21), and the side surface section (32) of the radially inner wall surface (30) of the cavity section (21) includes a portion having a center of curvature that is radially outward of the radially inner wall surface (30) of the cavity section (21).

According to the third aspect, the central surface section (31) of the radially inner wall surface (30) of the cavity section (21) can be recessed with respect to the rotation center (Q) of the rotor core (11). The side surface section (32) of the radially inner wall surface (30) of the cavity section (21) can be raised toward the intersection (X) between the second reference line (L2) and the wall surface of the shaft hole (15).

A fourth aspect of the present disclosure is directed to the rotor of any one of the first to third aspects. In the fourth aspect, the side surface section (32) of the radially inner wall surface (30) of the cavity section (21) includes a flat surface section (32b) extending along the second reference line (L2).

According to the fourth aspect, the side surface section (32) of the radially inner wall surface (30) of the cavity section (21) can be closer to the second reference line (L2), and thus the portion of the rotor core (11) that is radially inward of the side surface section (32) of the radially inner wall surface (30) of the cavity section (21) can be reduced. Accordingly, the q-axis magnetic flux is less likely to pass through the portion of the rotor core (11) that is radially inward of the cavity section (21), and thus the q-axis inductance can be reduced and the reluctance torque can be increased.

A fifth aspect of the present disclosure is the rotor of any one of the first to fourth aspects. In the fifth aspect, the central surface section (31) of the radially inner wall surface (30) of the cavity section (21) curves along the wall surface of the shaft hole (15).

According to the fifth aspect, the central surface section (31) of the radially inner wall surface (30) of the cavity section (21) can be closer to the wall surface of the shaft hole (15), and thus the portion of the rotor core (11) that is radially inward of the central surface section (31) of the radially inner wall surface (30) of the cavity section (21) can be reduced. Accordingly, the q-axis magnetic flux is less likely to pass through the portion of the rotor core (11) that is radially inward of the cavity section (21), and thus the q-axis inductance can be reduced and the reluctance torque can be increased.

A sixth aspect of the present disclosure is the rotor of any one of the first to fifth aspects. In the sixth aspect, the cavity of the cavity section (21) includes a plurality of cavities, the first reference line (L1) bisects an angle between two lines, one of which connects the rotation center (Q) of the rotor core (11) and one of circumferential ends of a set of the plurality of cavities of the cavity section (21), and another one of which connects the rotation center (Q) of the rotor core (11) and another one of the circumferential ends of the set of the plurality of cavities of the cavity section (21), the rotor core (11) includes a reinforcing rib (60) between one of the plurality cavities of the cavity section (21) and another one of the plurality of cavities adjacent to the one of the plurality of cavities in a circumferential direction, where the reinforcing rib (60) extends from a radially inner side of the cavity section (21) to a radially outer side of the cavity section (21), and the reinforcing rib (60) is provided not to be on the first reference line (L1), and includes a linear part extending from the radially inner side of the cavity section (21) to the radially outer side of the cavity section (21) in a direction of a force acting on the reinforcing rib (60) while the rotor core (11) is rotating.

According to the sixth aspect, by providing the reinforcing rib (60), the stress concentration at the circumferential ends of the cavity section (21) while the rotor core (11) is rotating can be reduced.

A seventh aspect of the present disclosure is directed to a rotor. The rotor includes: a rotor core (11) that has a shaft hole (15) and that has a cavity section (21) provided for each magnetic pole and having a cavity, wherein a central surface section (31) of a radially inner wall surface (30) of the cavity section (21) includes a portion having a center of curvature that is radially inward of the radially inner wall surface (30) of the cavity section (21), where the central surface section (31) includes a vicinity of a first reference line (L1) that bisects an angle between two lines, one of which connects the rotation center (Q) of the rotor core (11) and one of circumferential ends of the cavity section (21), and another one of which connects the rotation center (Q) of the rotor core (11) and another one of the circumferential ends of the cavity section (21), and a side surface section (32) of the radially inner wall surface (30) of the cavity section (21) includes a portion having a center of curvature that is radially outward of the radially inner wall surface (30) of the cavity section (21), where the side surface section (32) extends from the central surface section (31) to the circumferential end of the cavity section (21).

According to the seventh aspect, the central surface section (31) of the radially inner wall surface (30) of the cavity section (21) can be recessed with respect to the rotation center (Q) of the rotor core (11). The side surface section (32) of the radially inner wall surface (30) of the cavity section (21) can be raised toward the intersection (X) between the second reference line (L2) and the wall surface of the shaft hole (15). The second reference lines (L2) are reference lines which extend in the radial direction from the rotation center (Q) of the rotor core (11), and each of which forms an angle with the first reference line (L1), where the angle is obtained by dividing 180° by the number of magnetic poles of the rotor core (11).

According to the seventh aspect, the radially inner wall surface (30) of the cavity section (21) can be closer to the wall surface of the shaft hole (15) and the second reference line (L2) than if the radially inner wall surface (30) of the cavity section (21) is formed in an arc shape raised toward the rotation center (Q) of the rotor core (11). Thus, the portion of the rotor core (11) that is radially inward of the cavity section (21) can be reduced. Accordingly, the q-axis magnetic flux is less likely to pass through the portion of the rotor core (11) that is radially inward of the cavity section (21), and thus the q-axis inductance can be reduced. As a result, the reluctance torque can be increased.

An eighth aspect of the present disclosure is directed to a rotor. The rotor includes: a rotor core (11) that has a shaft hole (15) and that has a cavity section (21) provided for each magnetic pole and having a cavity, wherein a central surface section (31) of a radially inner wall surface (30) of the cavity section (21) is recessed with respect to a rotation center (Q) of the rotor core (11), where the central surface section (31) includes a vicinity of a first reference line (L1) that bisects an angle between two lines, one of which connects the rotation center (Q) of the rotor core (11) and one of circumferential ends of the cavity section (21), and another one of which connects the rotation center (Q) of the rotor core (11) and another one of the circumferential ends of the cavity section (21), and a side surface section (32) of the radially inner wall surface (30) of the cavity section (21) includes a flat surface section (32b) extending along a second reference line (L2), where the side surface section (32) extends from the central surface section (31) to the circumferential end of the cavity section (21), where the second reference line (L2) is a reference line extending in a radial direction from the rotation center (Q) of the rotor core (11) and forms an angle with the first reference line (L1), and where the angle is obtained by dividing 180° by the number of magnetic poles of the rotor core (11).

According to the eighth aspect, the radially inner wall surface (30) of the cavity section (21) can be closer to the wall surface of the shaft hole (15) and the second reference line (L2) than if the radially inner wall surface (30) of the cavity section (21) is formed in an arc shape raised toward the rotation center (Q) of the rotor core (11). Thus, the portion of the rotor core (11) that is radially inward of the cavity section (21) can be reduced. Accordingly, the q-axis magnetic flux is less likely to pass through the portion of the rotor core (11) that is radially inward of the cavity section (21), and thus the q-axis inductance can be reduced. As a result, the reluctance torque can be increased.

A ninth aspect of the present disclosure relates to a motor including the rotor of any one of the first to eighth aspects.

A tenth aspect of the present disclosure relates to a compressor including the motor of the ninth aspect.

An eleventh aspect of the present disclosure relates to a refrigeration apparatus including the compressor of the tenth aspect.

### BRIEF DESCRIPTION OF THE DRAWINGS

FIG. 1 is a transverse sectional view of an exemplary configuration of a motor of an embodiment.
FIG. 2 is a transverse sectional view of an exemplary configuration of a rotor of the embodiment.
FIG. 3 is a transverse sectional view of an exemplary configuration of a main part of the rotor of the embodiment.
FIG. 4 is a transverse sectional view of an exemplary detailed configuration of the rotor of the embodiment.
FIG. 5 is a transverse sectional view of an exemplary configuration of a rotor of a first comparative example.
FIG. 6 is a magnetic flux diagram showing a distribution of the magnetic flux in the rotor of the embodiment.
FIG. 7 is a magnetic flux diagram showing a distribution of the magnetic flux in a rotor of the first comparative example.
FIG. 8 is a stress distribution diagram showing a stress distribution in a rotor of a second comparative example.
FIG. 9 is a stress distribution diagram showing a stress distribution in the rotor of the embodiment.
FIG. 10 is a transverse sectional view of an exemplary configuration of a main part of a rotor of a first variation of the embodiment.
FIG. 11 is a transverse sectional view of an exemplary configuration of a main part of a rotor of a second variation of the embodiment.
FIG. 12 is a transverse sectional view of an exemplary configuration of a main part of a rotor of a third variation of the embodiment.
FIG. 13 is a transverse sectional view of an exemplary configuration of a main part of a rotor of a fourth variation of the embodiment.
FIG. 14 is a longitudinal sectional view of a structure of a compressor.
FIG. 15 is a piping system diagram showing a configuration of a refrigeration apparatus.
FIG. 16 is a transverse sectional view showing the direction of a force acting on a reinforcing rib while a rotor core is rotating.
FIG. 17 is a graph showing an exemplary relationship between the electromagnetic force acting on a rotor core and the angle (α) between the line of action and a first imaginary line.
FIG. 18 is a graph showing an exemplary relationship between the torque acting on a rotor core and the angle (β) between the line of action and a second imaginary line.

### DESCRIPTION OF EMBODIMENT

An embodiment will be described in detail below with reference to the drawings. Note that the same reference characters denote the same or equivalent components in the drawings, and the description thereof will not be repeated.

### (Motor)

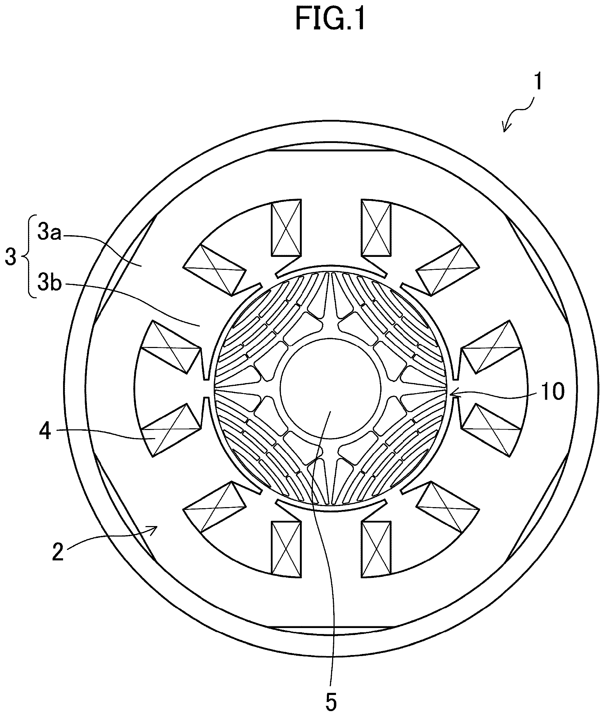

FIG. 1 shows an exemplary configuration of a motor (1) of an embodiment. The motor (1) includes a rotor (10) and a stator (2). The rotor (10) is fixed to a shaft (5). In this example, the motor (1) forms a synchronous reluctance motor. The rotor (10) is not provided with any permanent magnet.

In the following description, the direction of the rotation axis of the rotor (10) will be referred to as an "axial direction," the direction orthogonal to the direction of the rotation axis of the rotor (10) will be referred to as a "radial direction," and the direction around the rotation axis of the rotor (10) will be referred to as a "circumferential direction." In addition, a cross section in the axial direction will be referred to as a "longitudinal section," and a cross section orthogonal to the axial direction will be referred to as a "transverse section."

### [Stator]

The stator (2) is opposed to the rotor (10) with a certain gap therebetween. The stator (2) includes a stator core (3) and a plurality of windings (4). The stator core (3) includes a back yoke (3a) and a plurality of teeth (3b). The back yoke (3a) is formed in a substantially cylindrical shape. Each of the plurality of teeth (3b) extends radially inward from the inner circumferential surface of the back yoke (3a). The plurality of windings (4) are wound around the plurality of teeth (3b). In FIG. 1, hatching of the stator core (3) and a rotor core (11) to described later is omitted.

### [Rotor]

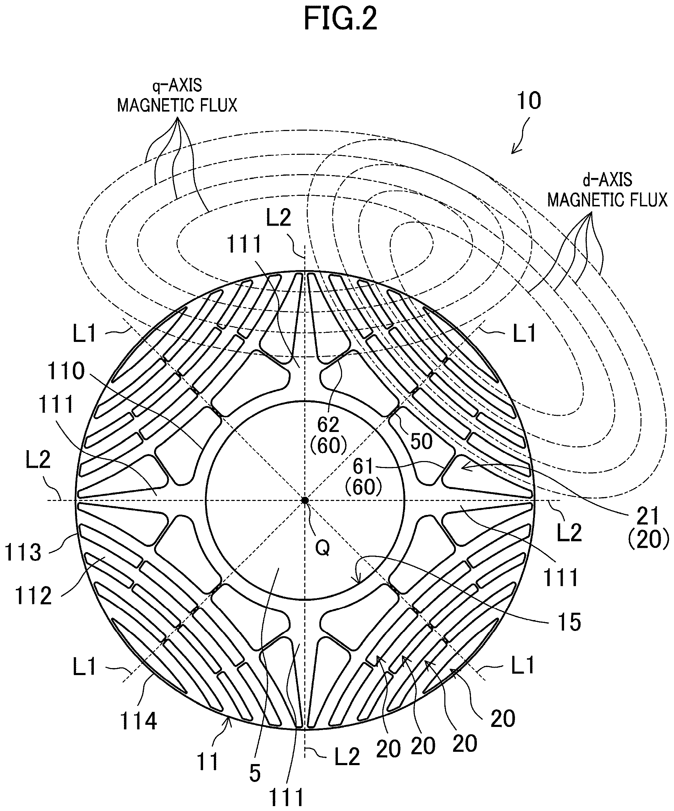

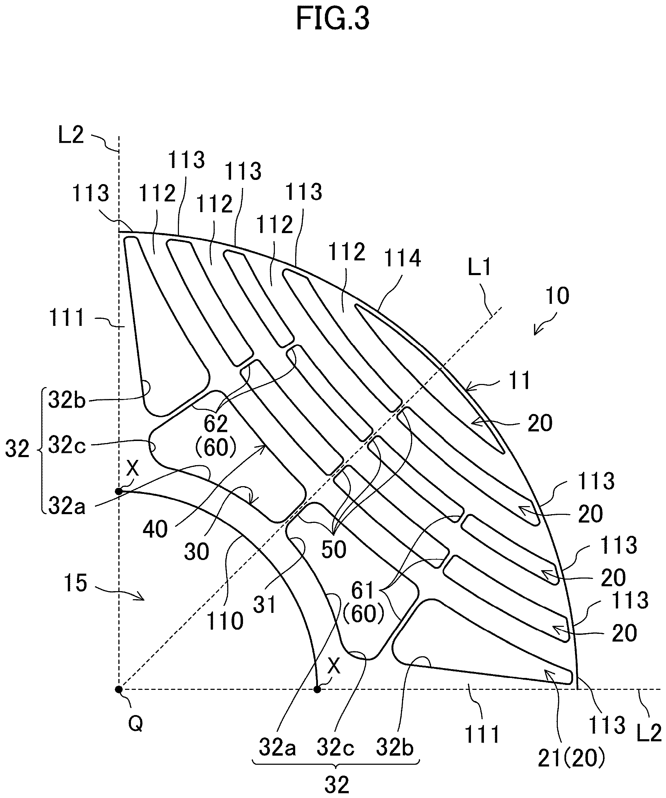

FIGS. 2 to 4 shows an exemplary configuration of the rotor (10). The rotor (10) includes the rotor core (11). A transverse section of the rotor core (11) has a shape that is constant throughout its axial length. In this example, the transverse section of the rotor core (11) has an outer shape that is a circular shape.

In this example, the rotor core (11) consists of a laminated core. Specifically, the rotor core (11) consists of a plurality of members stacked in the axial direction, each member being made of an electromagnetic steel sheet and being formed in a disc shape. In FIGS. 2 to 4, hatching of the rotor core (11) is emitted.

### [Reference Line]

In the rotor core (11), first reference lines (L1) and second reference lines (L2) are defined.

The first reference lines (L1) are reference lines which extend in the radial direction from the rotation center (Q) of the rotor core (11), and each of which is defined for the corresponding magnetic pole of the rotor core (11). The number of first reference lines (L1) is equal to the number of magnetic poles of the rotor core (11). The first reference lines (L1) are arranged at equal intervals in the circumferential direction. The first reference line (L1) serves as the center line of the magnetic pole of the rotor core (11). One magnetic pole of the rotor core (11) is a portion of the rotor core (11) which is line-symmetric with respect the corresponding one of the first reference lines (L1). The first reference line (L1) is a line that bisects the angle between two lines, one of which connects the rotation center (Q) of the rotor core (11) and one of the circumferential ends of the cavity section (21), and the other one of which connects the rotation center (Q) of the rotor core (11) and the other one of the circumferential ends of the cavity section (21).

The second reference lines (L2) are reference lines which extend in the radial direction from the rotation center (Q) of the rotor core (11), and each of which forms an angle with the first reference line (L1), where the angle is obtained by dividing 180° by the number of magnetic poles of the rotor core (11). The number of second reference lines (L2) is equal to the number of magnetic poles of the rotor core (11). The second reference line (L2) serves as a boundary between the magnetic poles of the rotor core (11). The second reference lines (L2) are arranged at equal intervals in the circumferential direction. One magnetic pole of the rotor core (11) is a portion of the rotor core (11) which is located between two of the second reference lines (L2) adjacent to each other in the circumferential direction.

In this example, the number of magnetic poles of the rotor core (11) is "four". For the rotor core (11), four first reference lines (L1) which are in one-to-one correspondence with four magnetic poles of the rotor core (11) and four second reference lines (L2) which are in one-to-one correspondence with four boundaries of the magnetic poles of the rotor core (11) are defined. The first reference lines (L1) and the second reference lines (L2) are alternately arranged at equal intervals in the circumferential direction. The angle between the first reference line (L1) and the second reference line (L2) adjacent to the first reference line (L1) in the circumferential direction is 45° (=180°/4).

By cavity sections (20) described later being formed in the rotor core (11), the first reference line (L1) serves as a q-axis along which the magnetic flux is less likely to pass, and the second reference line (L2) serves as a d-axis along which the magnetic flux is more likely to pass. The d-axis is an axis along which the magnetic resistance is minimum. The q-axis is an axis of which a phase difference from the d-axis with respect to the electrical angle is 90°. The q-axis is an axis magnetically orthogonal to the d-axis.

### [Reluctance Torque and Power Factor]

In this example, the rotor (10) is rotated by reluctance torque corresponding to a difference in inductance between the salient pole direction (d-axis) and the non-salient pole direction (q-axis). As the difference obtained by subtracting the q-axis inductance from the d-axis inductance increases, the reluctance torque increases. Thus, reduction in the q-axis inductance can cause larger reluctance torque acting on the rotor (10).

As the saliency ratio obtained by dividing the d-axis inductance by the q-axis inductance increases, the power factor of the motor (1) increases. Thus, reduction in the q-axis inductance can cause a larger power factor of the motor (1).

### [Shaft Hole]

The rotor core (11) has a shaft hole (15). The shaft hole (15) is located at a central portion of the rotor core (11) and penetrates the rotor core (11) in the axial direction. A transverse section of the shaft hole (15) has a circular shape centered on the rotation center (Q) of the rotor core (11) and is constant throughout the axial length of the rotor core (11). A wall surface of the shaft hole (15) is a cylindrical surface centered on the rotation center (Q) of the rotor core (11).

### [Cavity Section]

In the rotor core (11), the plurality of cavity sections (20) arranged in the radial direction for each magnetic pole of the rotor core (11) are formed. In this example, five cavity sections (20) are arranged in the radial direction for each magnetic pole of the rotor core (11). The cavity section (20) includes one or more cavities.

Each of the plurality of cavity sections (20) is located radially outside the shaft hole (15) and penetrates the rotor core (11) in the axial direction. Each of the plurality of cavity sections (20) extends to intersect with the first reference line (L 1). Each of the plurality of cavity sections (20) is line-symmetric with respect to the first reference line (L1). Each of the plurality of cavity sections (20) does not intersect with the second reference lines (L2).

In this example, among the plurality of the cavity sections (20) provided for each magnetic pole of the rotor core (11), the cavity sections (20) except those most inward in the radial direction are formed in an arc shape raised toward the rotation center (Q) of the rotor core (11).

Specifically, a radially inner wall surface of the second one of the cavity sections (20) from the radially inner side is formed in an arc shape raised toward the rotation center (Q) of the rotor core (11). A radially outer wall surface of the second one of the cavity sections (20) is also formed in an arc shape raised toward the rotation center (Q) of the rotor core (11). The cavity width, which is a distance between the radially inner wall surface of the second one of the cavity sections (20) and the radially outer wall surface of the second one of the second cavity sections (20), is constant throughout the circumferential length of the second cavity section (20).

The third and fourth ones of the cavity sections (20) from the radially inner side have the same configuration as the second one of the cavity sections (20). The distance between the radially inner wall surface of the third one of the cavity sections (20) and the radially outer wall surface of the second one of the cavity sections (20) (i.e., the width of the second one of the partition walls (112) described later) is constant throughout the circumferential length of the third one of the cavity sections (20). The distance between the radially inner wall surface of the fourth one of the cavity sections (20) and the radially outer wall surface of the third one of the cavity sections (20) (i.e., the width of the third one of the partition walls (112) described later) is constant throughout the circumferential length of the fourth one of the cavity sections (20).

The fifth one of the cavity sections (20) from the radially inner side is the radially outermost one of the plurality of cavity sections (20) arranged in the radial direction. A radially inner wall surface of the fifth one of the cavity sections (20) is formed in an arc shape raised toward the rotation center (Q) of the rotor core (11). A radially outer wall surface of the fifth one of the cavity sections (20) is formed in an arc shape recessed with respect to the rotation center (Q) of the rotor core (11). The distance between the radially inner wall surface of the fifth one of the cavity sections (20) and the radially outer wall surface of the fourth one of the cavity sections (20) (i.e., the width of the fourth one of the partition walls (112) described later) is constant throughout the circumferential length of the fifth one of the cavity sections (20).

### [Radially Innermost Cavity Section]

Next, the radially innermost one of the plurality of cavity sections (20) provided for each magnetic pole of the rotor core (11) will be described. The radially innermost one of the cavity sections (20) is the first one of the cavity sections (20) from the radially inner side. The radially innermost one of the cavity sections (20) will be hereinafter referred to as "the cavity section (21)." The radially inner wall surface (30) of the cavity section (21) will be referred to as "the inner wall surface (30)," and the radially outer wall surface (40) of the cavity section (21) will be referred to as "the outer wall surface (40)."

### [Inner Wall Surface]

The inner wall surface (30) of the cavity section (21) includes a central surface section (31) including a vicinity of the first reference line (L1), and includes two side surface sections (32) each extending from the central surface section (31) to the circumferential end of the cavity section (21). One of the two side surface sections (32) extends from one end of the central surface section (31) in the of circumferential direction to one end of the cavity section (21) in the circumferential direction, and the other one of the two side surface sections (32) extends from the other end of the central surface section (31) in the circumferential direction to the other end of the cavity section (21) in the circumferential direction.

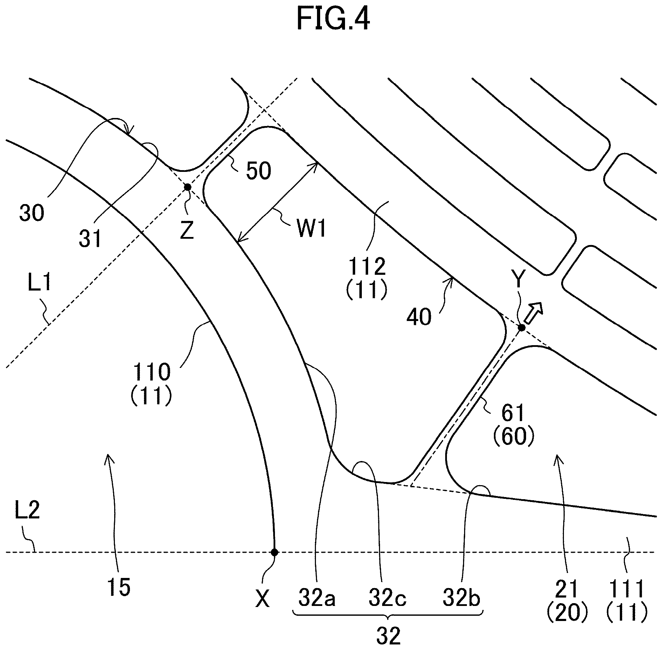

"The vicinity of the first reference line (L1)" of the inner wall surface (30) of the cavity section (21) includes a portion of the inner wall surface (30) of the cavity section (21), where "the portion includes the intersection (Z) between the inner wall surface (30) of the cavity section (21) and the first reference line (L1)." In this example, a center rib (50) along the first reference line (L1) is provided in the cavity section (21), and thus "the intersection (Z) between the inner wall surface (30) of the cavity section (21) and the first reference line (L1)" is an intersection between an arc-shaped imaginary plane section (indicated by a broken line in FIG. 4) of the inner wall surface (30) of the cavity section (21) and the first reference line (L1). "The vicinity of the first reference line (L1)" of the inner wall surface (30) of the cavity section (21) also includes a portion of the inner wall surface (30) of the cavity section (21) which is closest to the first reference line (L1).

### <Central Surface Section>

The central surface section (31) of the inner wall surface (30) of the cavity section (21) is recessed with respect to the rotation center (Q) of the rotor core (11). The central surface section (31) of the inner wall surface (30) of the cavity section (21) includes a portion having the center of curvature that is radially inward of the inner wall surface (30) of the cavity section (21).

In this example, the central surface section (31) curves along the wall surface of the shaft hole (15). The distance between the central surface section (31) and the wall surface of the shaft hole (15) is constant throughout the circumferential length of the central surface section (31).

### <Side Surface Section>

The side surface section (32) of the inner wall surface (30) of the cavity section (21) is raised toward the intersection (X) between the second reference line (L2) and the wall surface of the shaft hole (15). The side surface section (32) of the inner wall surface (30) of the cavity section (21) includes a portion having the center of curvature that is radially outward of the inner wall surface (30) of the cavity section (21).

In this example, the side surface section (32) includes an arc surface section (32a), a flat surface section (32b), and a connecting surface section (32c). The arc surface section (32a) is a portion of the side surface section (32) which is connected to the central surface section (31). The flat surface section (32b) is a portion of the side surface section (32) which is connected to a circumferential end of the cavity section (21). The connecting surface section (32c) is a portion of the side surface section (32) which connects the arc surface section (32a) and the flat surface section (32b).

The arc surface section (32a) curves along the wall surface of the shaft hole (15). In this example, the distance between the arc surface section (32a) and the wall surface of the shaft hole (15) is constant throughout the circumferential length of the arc surface section (32a). The distance between the arc surface section (32a) and the wall surface of the shaft hole (15) is equal to the distance between the central surface section (31) and the wall surface of the shaft hole (15).

The flat surface section (32b) extends along the second reference line (L2). In this example, the distance between the flat surface section (32b) and the second reference line (L2) gradually shortens toward the radially outer side. In other words, the flat surface section (32b) is inclined with respect to the second reference line (L2), gradually approaching the second reference line (L2) toward the radially outer side.

The connecting surface section (32c) curves to be raised toward the intersection (X) between the second reference line (L2) and the wall surface of the shaft hole (15). The connecting surface section (32c) has the center of curvature that is radially outward of the inner wall surface (30).

### [Outer Wall Surface]

The outer wall surface (40) of the cavity section (21) is formed in an arc shape raised toward the rotation center (Q) of the rotor core (11). The distance between the outer wall surface (40) of the cavity section (21) and the radially inner wall surface of the second one of the cavity sections (20) (i.e., the width of the first one of the partition walls (112) described later) is constant throughout the circumferential length of the second cavity section (20).

### [Cavity Width]

The inner wall surface (30) of the cavity section (21) includes a portion in which a cavity width (W1), a distance between the inner wall surface (30) and the outer wall surface (40) of the cavity section (21), is longer than the cavity width (W1) at the vicinity of the first reference line (L1) of the inner wall surface (30) of the cavity section (21).

The cavity width (W1) of the cavity section (21) is a distance defined with respect to the outer wall surface (40) of the cavity section (21). Specifically, the cavity width (W1) of the cavity section (21) is a distance along the line perpendicular to the outer wall surface (40) of the cavity section (21) (i.e., a distance between the inner wall surface (30) and the outer wall surface (40) of the cavity section (21)).

In this example, "the portion in which a cavity width (W1), a distance between the inner wall surface (30) and the outer wall surface (40) of the cavity section (21), is longer than the cavity width (W1) at the vicinity of the first reference line (L1) of the inner wall surface (30) of the cavity section (21)" of the inner wall surface (30) of the cavity section (21) is the connecting surface section (32c) of the inner wall surface (30) of the cavity section (21). For example, the cavity width (W1) of "the portion in which a cavity width (W1), a distance between the inner wall surface (30) and the outer wall surface (40) of the cavity section (21), is longer than the cavity width (W1) at the vicinity of the first reference line (L1) of the inner wall surface (30) of the cavity section (21)" of the inner wall surface (30) of the cavity section (21) is 1.5 to 5 times longer than the cavity width (W1) at the vicinity of the first reference line (L1) of the inner wall surface (30) of the cavity section (21).

In this example, the cavity width (W1) at the vicinity of the first reference line (L1) in the inner wall surface (30) of the cavity section (21) is the cavity width (W1) at the intersection (Z) between the inner wall surface (30) of the cavity section (21) and the first reference line (L1) in the inner wall surface (30) of the cavity section (21).

### [Configuration of Rotor Core]

The rotor core (11) includes a base (110) and a plurality of salient poles (111). The number of salient poles (111) is equal to the number of second reference lines (L2) defined in the rotor core (11). In this example, the number of salient poles (111) is four.

The rotor core (11) includes a plurality of partition walls (112), a plurality of side bridges (113), and a center bridge (114) for each magnetic pole of the rotor core (11). In this example, four partition walls (112), eight side bridges (113), and one center bridge (114) are provided for each magnetic pole of the rotor core (11).

### [Base]

The base (110) is formed in a cylindrical shape. In this example, a width of the base (110) (i.e., a length in the radial direction) is constant throughout the circumference of the base (110). An inner circumferential surface of the base (110) forms the wall surface of the shaft hole (15).

### [Salient Pole]

The plurality of salient poles (111) are arranged at equal intervals in the circumferential direction. In this example, each of the plurality of salient poles (111) extends in the radial direction from the base (110) so that the center line of the salient pole (111) extends along the second reference line (L2). The width of the salient pole (111) (i.e., the length orthogonal to the extending direction) gradually decreases toward the tip end of the salient pole (111). A base end of the salient pole (111) (i.e., a connecting portion between the salient pole (111) and the base (110)) is rounded.

### [Partition Wall]

The plurality of partition walls (112) provided for each magnetic pole of the rotor core (11) are arranged in the radial direction. Each of the plurality of partition walls (112) extends to intersect with the first reference line (L1) and is line-symmetric with respect to the first reference line (L1). In this example, each of the four partition walls (112) has the same configuration. The partition wall (112) is formed in an arc shape raised toward the rotation center (Q) of the rotor core (11). The width of the partition wall (112) (i.e., the length orthogonal to the circumferential direction) is constant throughout the circumferential length of the partition wall (112).

The distance between the first one of the partition walls (112) and the second one of the partition walls (112) from the radially inner side (i.e., the cavity width of the second one of the cavity sections (20)) is constant throughout the circumferential length of the second one of the partition walls (112). The same applies to the distance between the second one of the partition walls (112) and the third one of the partition walls (112) from the radially inner side (i.e., the cavity width of the third one of the cavity sections (20)) and the distance between the third one of the partition walls (112) and the fourth one of the partition walls (112) from the radially inner side (i.e., the cavity width of the fourth one of the cavity sections (20)).

### [Side Bridge]

The plurality of side bridges (113) provided for each magnetic pole of the rotor core (11) include two types of side bridges (113). Hereinafter, the side bridges (113) of one of the two types will be referred to as "first side bridges (113)," and the side bridges (113) of the other one of the two types will be referred to as "second side bridges (113)."

The first side bridges (113) connect the circumferential end of the first one of the partition walls (112) and the tip ends of the salient pole (111). In this example, two first side bridges (113) are provided for each magnetic pole of the rotor core (11). One of the first side bridges (113) is disposed between one end of the first one of the partition walls (112) in the circumferential direction and the tip end of the salient pole (111) that is circumferentially adjacent to the end of the first one of the partition walls (112) in the circumferential direction. The other one of the first side bridges (113) is disposed between the other end of the first one of the partition walls (112) in the circumferential direction and the tip end of the salient pole (111) that is circumferentially adjacent to the other end of the first one of the partition walls (112) in the circumferential direction.

The second side bridges (113) connect the circumferential ends of two partition walls (112) adjacent to each other in the radial direction. In this example, six second side bridges (113) are provided for each magnetic pole of the rotor core (11). Three of the second side bridges (113) are arranged between the circumferential ends, on one side, of the four partition walls (112) arranged in the radial direction, and the remaining three of the second side bridges (113) are arranged between the circumferential ends, on the other side, of the four partition walls (112) arranged in the radial direction.

### [Center Bridge]

The center bridge (114) provided for each magnetic pole of the rotor core (11) curves in an arc shape recessed with respect to the rotation center (Q) of the rotor core (11), and connects both circumferential ends of the radially outermost one of the partition walls (112).

### [Relationship between Structure of Rotor Core and Cavity Section]

The cavity section (21), which is the first one of the cavity sections (20), consists of the base (110), the two salient poles (111) adjacent to each other in the circumferential direction, the first one of the partition walls (112) between the two salient poles (111), and the two side bridges (113) connecting the tip ends of the two salient poles (111) and the two circumferential ends of the first one of the partition walls (112).

The inner wall surface (30) of the cavity section (21) consists of "the wall surfaces of the two salient poles (111) adjacent to each other in the circumferential direction" and "the arc surface section of the outer circumferential surface of the base (110) between the wall surfaces of the two salient poles (111)."

Specifically, the central surface section (31) of the inner wall surface (30) of the cavity section (21) consists of part of "the arc surface section of the outer circumferential surface of the base (110) between the wall surfaces of the two salient poles (111)." The arc surface section (32a) of the side surface section (32) of the inner wall surface (30) of the cavity section (21) consists of the remaining part of "the arc surface section of the outer circumferential surface of the base (110) between the wall surfaces of the two salient poles (111)." The flat surface section (32b) consists of the remaining part of "the wall surfaces of the salient poles (111)" except "the wall surfaces of the base ends of the salient poles (111)." The connecting surface section (32c) consists of "the wall surfaces of the base ends of the salient poles (111)."

The outer wall surface (40) of the cavity section (21) consists of the radially inner wall surface of the first partition wall (112). The end surface of the cavity section (21) in the circumferential direction consists of the radially inner wall surface of the first side bridge (113).

### [Center Rib]

The rotor core (11) includes the center rib (50) for each magnetic pole of the rotor core (11). In this example, the center rib (50) is provided in each of the cavity sections (20) except the radially outermost, fifth one of the plurality of cavity sections (20) provided for the magnetic poles of the rotor core (11).

The center rib (50) provided in the cavity section (21) which is the first one of the cavity sections (20) extends along the first reference line (L1) from the inner wall surface (30) of the cavity section (21) to the outer wall surface (40) of the cavity section (21). Specifically, the center rib (50) provided in the cavity section (21) includes a linear part extending along the first reference line (L1) from the inner wall surface (30) of the cavity section (21) to the outer wall surface (40) of the cavity section (21).

In this example, the center rib (50) is formed so that the center line of the center rib (50) extends along the first reference line (L1). The center rib (50) has a base end of which the width (the length orthogonal to the extending direction) gradually decreases as the distance from the inner wall surface (30) of the cavity section (21) increases. The center rib (50) has a tip end of which the width gradually increases as the distance to the outer wall surface (40) of the cavity section (21) decreases. The width of the part of the center rib (50) except the base end and the tip end is the same (constant).

The configuration of the center rib (50) provided in each of the second to fourth ones of the cavity sections (20) is the same as that of the center rib (50) provided in the cavity section (21).

### [Reinforcing Rib]

The rotor core (11) includes a reinforcing rib (60) for each magnetic pole of the rotor core (11). In this example, the reinforcing rib (60) is provided in each of the first to third ones of the plurality of cavity sections (20) provided for each magnetic pole of the rotor core (11).

The reinforcing rib (60) provided in the cavity section (21), which is the first one of the cavity sections (20), extends from the inner wall surface (30) of the cavity section (21) to the outer wall surface (40) of the cavity section (21). Specifically, the reinforcing rib (60) is provided not to be on the first reference line (L1), and includes a linear part from the inner wall surface (30) of the cavity section (21) to the outer wall surface (40) of the cavity section (21) in the direction of the force acting on the reinforcing rib (60) while the rotor core (11) is rotating. The direction of the force acting on the reinforcing rib (60) while the rotor core (11) is rotating is the direction of the force acting on the intersection (Y) between the reinforcing rib (60) and the outer wall surface (40) of the cavity section (21) (i.e., the direction of the white arrow in FIG. 4).

In this example, the reinforcing rib (60) is formed so that the center line of the reinforcing rib (60) (i.e., the straight line indicated by the one-dot chain line in the figure) extends in the direction of the force acting on the reinforcing rib (60) while the rotor core (11) is rotating. The reinforcing rib (60) has a base end of which the width (the length orthogonal to the extending direction) gradually decreases as the distance from the inner wall surface (30) of the cavity section (21) increases. The reinforcing rib (60) has a tip end of which the width gradually increases as the distance to the outer wall surface (40) of the cavity section (21) decreases. The width of the part of the reinforcing rib (60) except the base end and the tip end is the same (constant).

In this example, the cavity section (21) is provided with two reinforcing ribs (60). Hereinafter, one of the two reinforcing ribs (60) will be referred to as a "first rib (61)," and the other one of the two reinforcing ribs (60) will be referred to as a "second rib (62)." The second rib (62) is line-symmetric to the first rib (61) with respect to the first reference line (L1).

The configuration of the reinforcing rib (60) provided in each of the second to third ones of the cavity sections (20) is the same as that of the reinforcing rib (60) provided in the cavity section (21).

As described above, in this example, the center rib (50) and the reinforcing rib (60) are provided in the cavity section (21), thereby dividing the cavity of the cavity section (21) into a plurality of cavities. Thus, the first reference line (L1) can be regarded as a line that bisects the angle between two lines, one of which connects the rotation center (Q) of the rotor core (11) and one of the circumferential ends of the set of the plurality of cavities of the cavity section (21), and the other one of which connects the rotation center (Q) of the rotor core (11) and the other one of the circumferential ends of the set of the plurality of cavities of the cavity section (21).

### [Comparison between Embodiment and First Comparative Example]

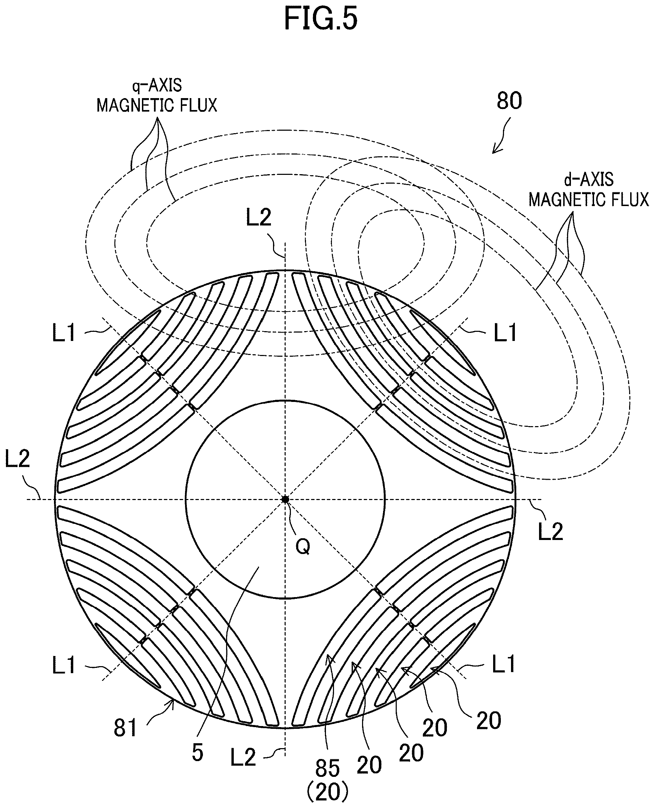

Next, the embodiment and a first comparative example will be compared with reference to FIGS. 2 and 5.

FIG. 5 shows an exemplary configuration of a rotor (80) of the first comparative example. The rotor (80) of the first comparative example includes a rotor core (81). The rotor core (81) is different in the configuration of the radially innermost one of the cavity sections (20) from the rotor (10) of the embodiment. The other configurations of the rotor core (81) are the same as those of the rotor (10) of the embodiment.

A cavity section (85), which is the radially innermost one of the plurality of cavity sections (20) provided for each magnetic pole of the rotor core (81) of the first comparative example, has the same configuration as the other cavity sections (20). The cavity section (85) is formed in an arc shape raised toward the rotation center (Q) of the rotor core (81).

As shown in FIG. 5, in the rotor (80) of the first comparative example, the cavity section (85) is formed in an arc shape raised toward the rotation center (Q) of the rotor core (11), and thus it is difficult to reduce the portion of the rotor core (81) that is located radially inward of the cavity section (85).

In the rotor (80) of the first comparative example, the q-axis magnetic flux easily passes through the portion of the rotor core (81) that is radially inward of the cavity section (85), and thus it is difficult to reduce the q-axis inductance. Accordingly, it is difficult to increase the reluctance torque acting on the rotor (80).

On the other hand, as shown in FIG. 2, in the rotor (10) of the embodiment, the central surface section (31) of the inner wall surface (30) of the cavity section (21) is recessed with respect to the rotation center (Q) of the rotor core (11). The side surface section (32) of the inner wall surface (30) of the cavity section (21) is raised toward the intersection (X) between the second reference line (L2) and the wall surface of the shaft hole (15).

In the rotor (10) of the embodiment, the above configuration enables the inner wall surface (30) of the cavity section (21) to be closer to the wall surface of the shaft hole (15) and the second reference line (L2) than if the inner wall surface (30) of the cavity section (21) is formed in an arc shape raised toward the rotation center (Q) of the rotor core (11) (i.e., the rotor (80) of the first comparative example). For example, the inner wall surface (30) of the cavity section (21) can be closer to the wall surface of the shaft hole (15) and the second reference line (L2) than if the inner wall surface (30) of the cavity section (21) is formed in "an arc shape raised toward the rotation center (Q) of the rotor core (11) and having an apex passing through the intersection (Z) shown in FIG. 4."

In this manner, the inner wall surface (30) of the cavity section (21) can be closer to the wall surface of the shaft hole (15) and the second reference line (L2), and thus the portion of the rotor core (11) that is radially inward of the cavity section (21) can be reduced. Accordingly, the q-axis magnetic flux is less likely to pass through the portion of the rotor core (11) that is radially inward of the cavity section (21), and thus the q-axis inductance can be reduced. As a result, the reluctance torque can be increased.

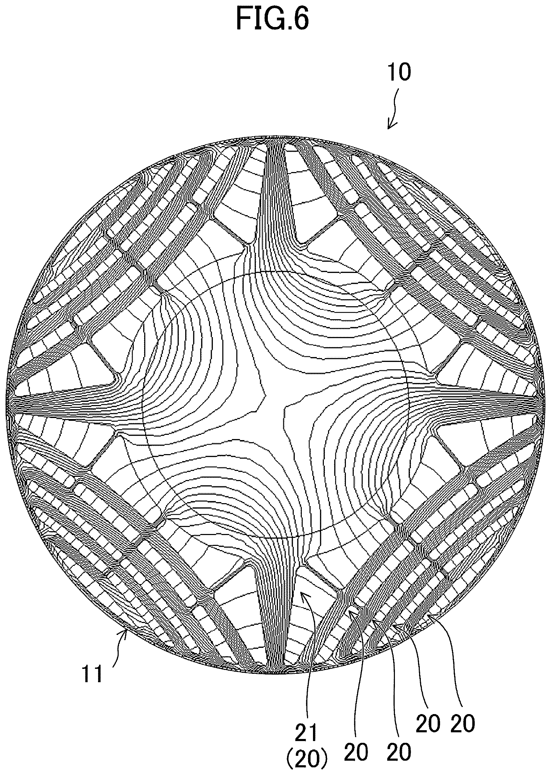

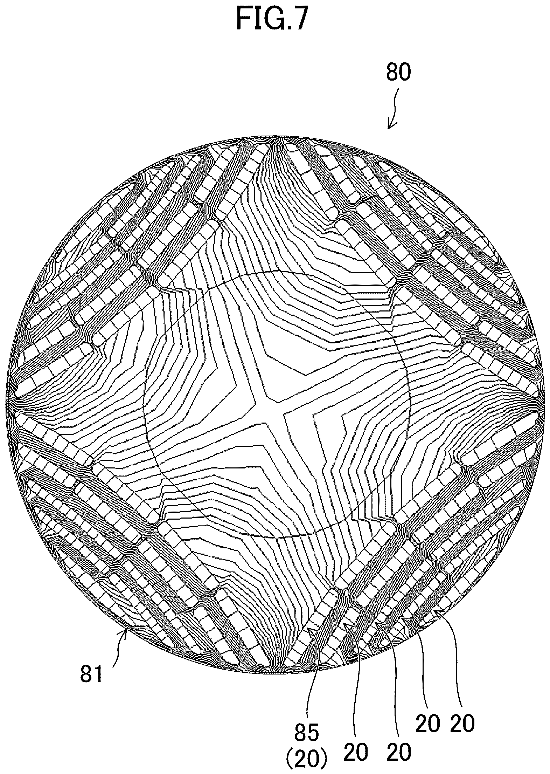

FIG. 6 shows an exemplary distribution of the magnetic flux in the rotor (10) of the embodiment, and FIG. 7 shows an exemplary distribution of the magnetic flux in the rotor (80) of the first comparative example. The amount of leakage flux in the cavity section (21) of the rotor core (11) of the rotor (10) of the embodiment shown in FIG. 6 is smaller than that in the cavity section (85) of the rotor core (81) of the rotor (80) of the first comparative example shown in FIG. 7.

### [Comparison between Embodiment and Second Comparative Example]

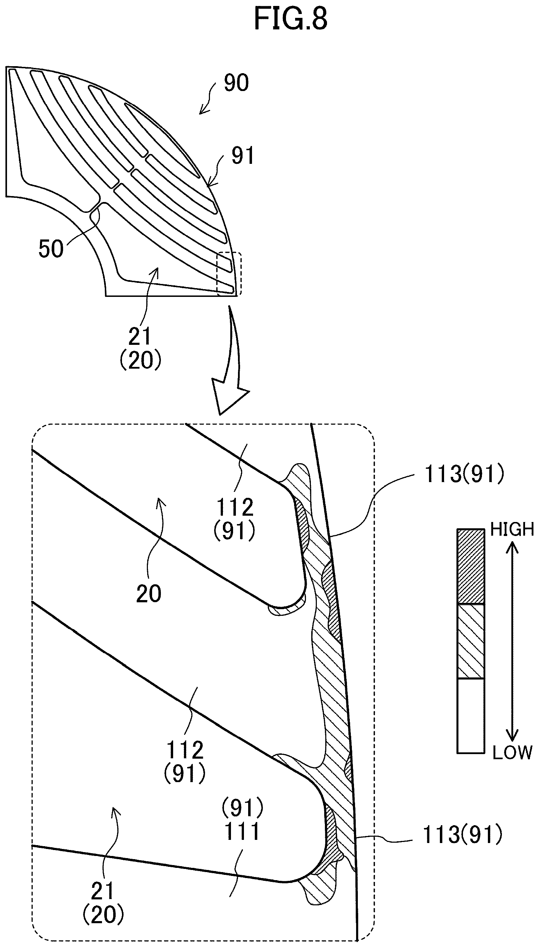

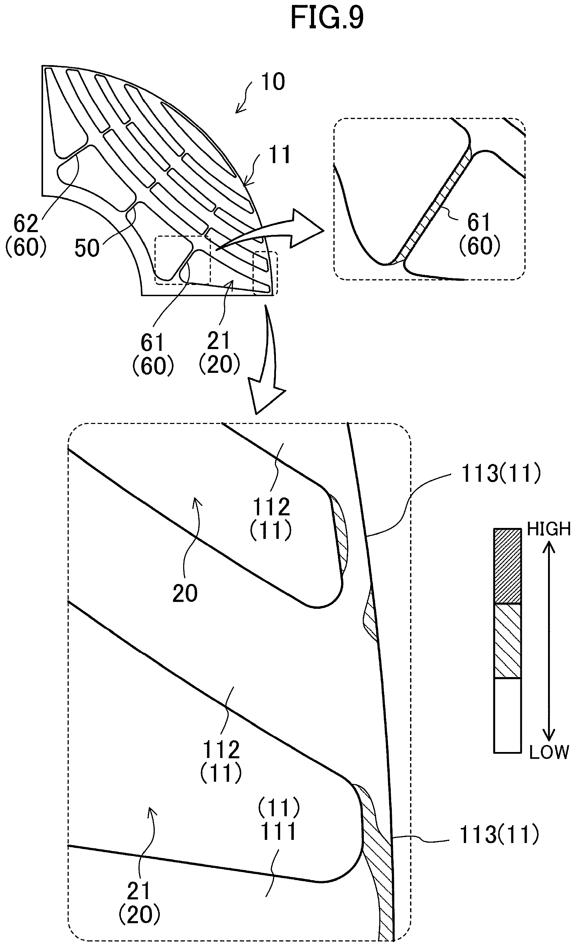

Next, the embodiment and a second comparative example will be compared with reference to FIGS. 8 and 9.

As shown in FIG. 8, a rotor (90) of the second comparative example includes a rotor core (91). The rotor core (91) is different in the internal structure of the cavity sections (20) from the rotor core (11) of the embodiment. The other configurations of the rotor core (91) are the same as those of the rotor core (11) of the embodiment.

The cavity section (20) of the rotor core (91) of the second comparative example is not provided with the reinforcing rib (60). The rotor core (91) of the second comparative example does not include the reinforcing rib (60).

FIG. 8 shows an exemplary stress distribution in the rotor core (91) where the rotor (90) of the second comparative example is rotating. As shown in FIG. 8, in the rotor (90) of the second comparative example, when the rotor (90) is rotating so that the centrifugal force is acting on the rotor core (91), stress is likely to concentrate on the circumferential ends (i.e., the side bridges (113)) of the cavity section (20).

FIG. 9 shows an exemplary stress distribution in the rotor core (11) where the rotor (10) of the embodiment is rotating. As shown in FIG. 9, the rotor (10) of the embodiment is provided with the reinforcing ribs (60), and thus the stress concentration at the circumferential ends (i.e., the side bridges (113)) of the cavity section (20) is reduced. The stress distribution in the reinforcing rib (60) is uniform throughout the reinforcing rib (60) (i.e., the distribution has little unevenness).

### [Advantages of Embodiment]

As described above, in the embodiment, the central surface section (31) of the inner wall surface (30) of the cavity section (21) is recessed with respect to the rotation center (Q) of the rotor core (11). The side surface section (32) of the inner wall surface (30) of the cavity section (21) is raised toward the intersection (X) between the second reference line (L2) and the wall surface of the shaft hole (15).

According to the above configuration, the inner wall surface (30) of the cavity section (21) can be closer to the wall surface of the shaft hole (15) and the second reference line (L2) than if the inner wall surface (30) of the cavity section (21) is formed in an arc shape raised toward the rotation center (Q) of the rotor core (11). Thus, the portion of the rotor core (11) that is radially inward of the cavity section (21) can be reduced. Accordingly, the q-axis magnetic flux is less likely to pass through the portion of the rotor core (11) that is radially inward of the cavity section (21), and thus the q-axis inductance can be reduced. As a result, the reluctance torque can be increased.

According to the above configuration, the q-axis inductance can be reduced, and thus the saliency ratio (i.e., the ratio obtained by dividing the d-axis inductance by the q-axis inductance) can be increased. Accordingly, the power factor of the motor (1) can be increased.

According to the above configuration, the reluctance torque can be increased, and thus the motor current required to rotationally drive the rotor (10) (i.e., the current flowing through the windings (4) of the stator (2)) can be reduced. Accordingly, the copper loss of the motor (1) can be reduced, and thus the efficiency of the motor (1) can be improved.

In the embodiment, the outer wall surface (40) of the cavity section (21) is formed in an arc shape raised toward the rotation center (Q) of the rotor core (11). The inner wall surface (30) of the cavity section (21) includes a portion in which a cavity width (W1), a distance between the inner wall surface (30) and the outer wall surface (40) of the cavity section (21), is longer than the cavity width (W1) at the vicinity of the first reference line (L1) of the inner wall surface (30) of the cavity section (21).

According to the above configuration, by the outer wall surface (40) of the cavity section (21) being formed in the arc shape raised toward the rotation center (Q) of the rotor core (11), the magnetic path of the d-axis magnetic flux can be easily secured in the portion of the rotor core (11) that is radially outside the cavity section (21). Accordingly, decrease in the d-axis inductance can be reduced, and thus decrease in the reluctance torque can be reduced.

In the embodiment, the central surface section (31) of the inner wall surface (30) of the cavity section (21) includes a portion having the center of curvature that is radially inward of the inner wall surface (30) of the cavity section (21). The side surface section (32) of the inner wall surface (30) of the cavity section (21) includes a portion having the center of curvature that is radially outward of the inner wall surface (30) of the cavity section (21).

According to the above configuration, the central surface section (31) of the inner wall surface (30) of the cavity section (21) can be recessed with respect to the rotation center (Q) of the rotor core (11). The side surface section (32) of the inner wall surface (30) of the cavity section (21) can be raised toward the intersection (X) between the second reference line (L2) and the wall surface of the shaft hole (15).

In the embodiment, the side surface section (32) of the inner wall surface (30) of the cavity section (21) includes the flat surface section (32b) extending along the second reference line (L2).

According to the above configuration, the side surface section (32) of the inner wall surface (30) of the cavity section (21) can be closer to the second reference line (L2), and thus the portion of the rotor core (11) that is radially inward of the side surface section (32) of the inner wall surface (30) of the cavity section (21) can be reduced. Accordingly, the q-axis magnetic flux is less likely to pass through the portion of the rotor core (11) that is radially inward of the cavity section (21), and thus the q-axis inductance can be reduced and the reluctance torque can be increased.

In the embodiment, the central surface section (31) of the inner wall surface (30) of the cavity section (21) curves along the wall surface of the shaft hole (15).

According to the above configuration, the central surface section (31) of the inner wall surface (30) of the cavity section (21) can be closer to the wall surface of the shaft hole (15), and thus the portion of the rotor core (11) that is radially inward of the central surface section (31) of the inner wall surface (30) of the cavity section (21) can be reduced. Accordingly, the q-axis magnetic flux is less likely to pass through the portion of the rotor core (11) that is radially inward of the cavity section (21), and thus the q-axis inductance can be reduced and the reluctance torque can be increased.

In the embodiment, the cavity section (21) is line-symmetric with respect to the first reference line (L1). The rotor core (11) includes the reinforcing rib (60) (i.e., the first rib (61)) extending from the inner wall surface (30) of the cavity section (21) to the outer wall surface (40) of the cavity section (21). The reinforcing rib (60) is provided not to be on the first reference line (L1), and includes a linear part extending from the inner wall surface (30) of the cavity section (21) to the outer wall surface (40) of the cavity section (21) in the direction of the force acting on the reinforcing rib (60) while the rotor core (11) is rotating.

In other words, the rotor core (11) includes the reinforcing rib (60) (i.e., the first rib (61)) between a cavity of the cavity section (21) and another cavity adjacent to the cavity in the circumferential direction, where the reinforcing rib (60) (i.e., the first rib (61)) extends from the radially inner side of the cavity section (21) to the radially outer side of the cavity section (21). The reinforcing rib (60) is provided not to be on the first reference line (L1) that bisects the angle between two lines, one of which connects the rotation center (Q) of the rotor core (11) and one of the circumferential ends of the set of the plurality of cavities of the cavity section (21), and the other one of which connects the rotation center (Q) of the rotor core (11) and the other one of the circumferential ends of the set of the plurality of cavities of the cavity section (21); and the reinforcing rib (60) includes a linear part extending from the radially inner side of the cavity section (21) to the radially outer side of the cavity section (21) in the direction of the force acting on the first rib (61) while the rotor core (11) is rotating.

According to the above configuration, by providing the reinforcing rib (60), the stress concentration at the circumferential ends of the cavity section (21) while the rotor core (11) is rotating can be reduced.

In the embodiment, the reinforcing rib (60) (i.e., the first rib (61)) is formed so that the center line the reinforcing rib (60) extends in the direction of the force acting on the reinforcing rib (60) while the rotor core (11) is rotating.

According to the above configuration, the reinforcing rib (60) can be thinner than if the reinforcing rib (60) is not formed so that the center line of the reinforcing rib (60) extends in the direction of the force acting on the reinforcing rib (60) while the rotor core (11) is rotating. Accordingly, leakage flux passing through the reinforcing rib (60) can be reduced.

In the embodiment, the rotor core (11) includes the center rib (50) extending along the first reference line (L1) from the inner wall surface (30) of the cavity section (21) to the outer wall surface (40) of the cavity section (21). In other words, the rotor core (11) includes the center rib (50) between a cavity of the cavity section (21) and another cavity adjacent to the cavity in the circumferential direction, where the center rib (50) extends along the first reference line (L1) from the radially inner side of the cavity section (21) to the radially outer side of the cavity section (21).

According to the above configuration, by providing the center rib (50), the stress concentration at the circumferential ends of the cavity section (21) while the rotor core (11) is rotating can be reduced.

In the embodiment, the rotor core (11) includes another reinforcing rib (60) (i.e., the second rib (62)) extending from the inner wall surface (30) of the cavity section (21) to the outer wall surface (40) of the cavity section (21). The second rib (62) is provided not to be on the first reference line (L1), and includes a linear part extending from the inner wall surface (30) of the cavity section (21) to the outer wall surface (40) of the cavity section (21) in the direction of the force acting on the second rib (62) while the rotor core (11) is rotating.

In other words, the rotor core (11) includes the second rib (62) between a cavity of the cavity section (21) and another cavity adjacent to the cavity in the circumferential direction, where the second rib (62) extends from the radially inner side of the cavity section (21) to the radially outer side of the cavity section (21). The second rib (62) is provided not to be on the first reference line (L1), and includes a linear part extending from the radially inner side of the cavity section (21) to the radially outer side of the cavity section (21) in the direction of the force acting on the second rib (62) while the rotor core (11) is rotating.

According to the above configuration, by providing the second rib instead of the first rib (61), the stress concentration at the circumferential ends of the cavity section (21) while the rotor core (11) is rotating can be reduced.

In the embodiment, the second rib (62) is line-symmetric to the first rib (61) with respect to the first reference line (L1).

According to the above configuration, the stress concentration at both the circumferential ends of the cavity section (21) while the rotor core (11) is rotating can be reduced in balance.

In the embodiment, in the rotor core (11), the plurality of cavity sections (20) arranged in the radial direction for each magnetic pole of the rotor core (11) are formed. The cavity section (21) in which the reinforcing rib (60) (i.e., the first rib (61)) is provided is the radially innermost one of the plurality of cavity sections (20).

According to the above configuration, stress concentration is likely to be generated at the circumferential ends of the radially innermost cavity section (21) among the plurality of cavity sections (20) arranged in the radial direction while the rotor core (11) is rotating. Thus, by the first rib (61) being provided in the radially innermost cavity section (21) among the plurality of cavity sections (20) arranged in the radial direction, the stress concentration at the circumferential ends of the cavity section (21) while the rotor core (11) is rotating can be reduced effectively.

### (First Variation of Embodiment)

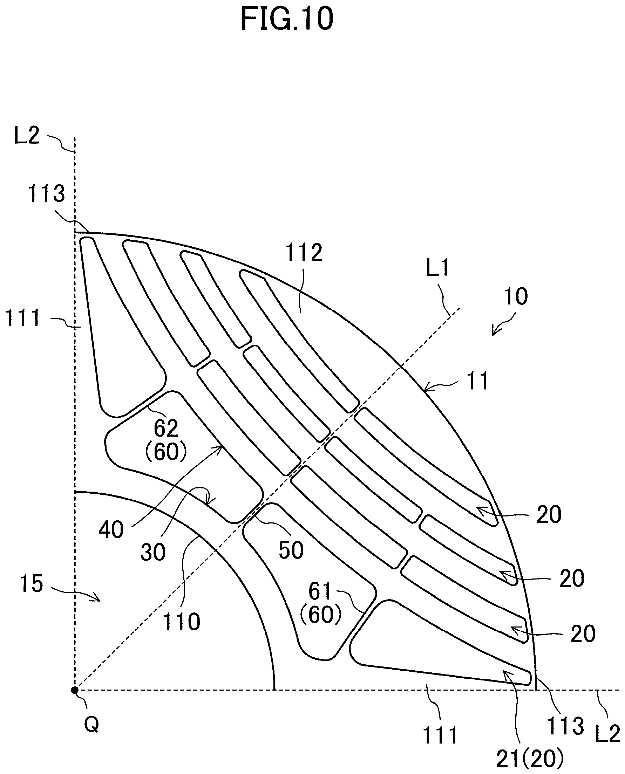

FIG. 10 shows an exemplary configuration of a main part of a rotor (10) of a first variation of the embodiment. In the rotor (10) of the first variation of the embodiment, the fifth one of the cavity sections (20) from the radially inner side is omitted. The other configurations of the rotor (10) of the first variation of the embodiment are the same as those of the rotor (10) of the embodiment.

In the first variation of the embodiment, the center bridge (114) is omitted. The radially outer wall surface of the fourth one of the partition walls (112) from the radially inner side (i.e., the radially outermost one of the partition walls (112)) is formed in an arc shape recessed with respect to the rotation center (Q) of the rotor core (11).

### (Second Variation of Embodiment)

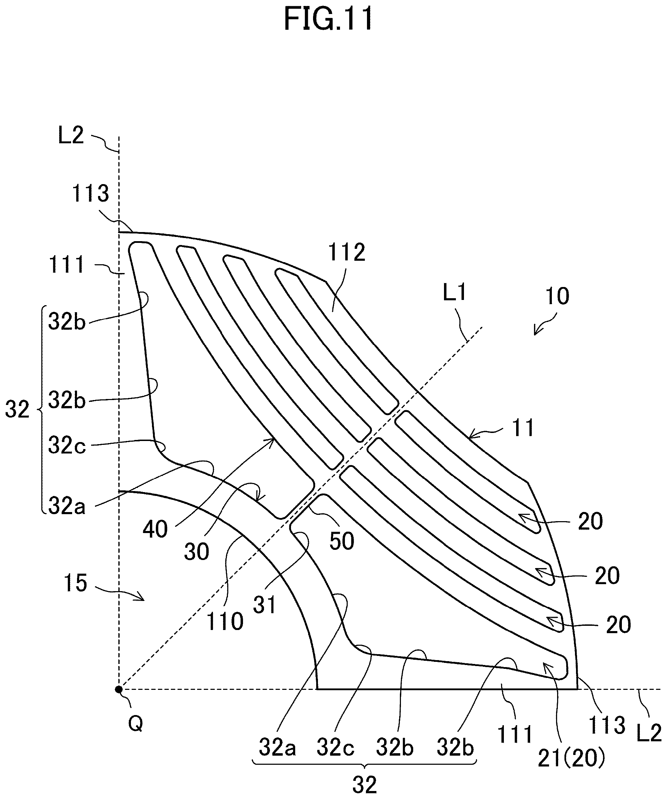

FIG. 11 shows an exemplary configuration of a main part of a rotor (10) of a second variation of the embodiment. The rotor (10) of the second variation of the embodiment is different in the configuration of the inner wall surface (30) of the cavity section (21) from the rotor (10) of the embodiment. In the rotor (10) of the second variation of the embodiment, the fifth one of the cavity sections (20) from the radially inner side is omitted. The other configurations of the rotor (10) of the second variation of the embodiment are the same as those of the rotor (10) of the embodiment. In FIG. 11, the reinforcing rib (60) is omitted.

In the second variation of the embodiment, the side surface section (32) of the inner wall surface (30) of the cavity section (21) includes a plurality of flat surface sections (32b). In the example of FIG. 11, the side surface section (32) includes two flat surface sections (32b). The other configurations of the side surface sections (32) of the inner wall surface (30) of the cavity section (21) are the same as those of the side surface sections (32) of the inner wall surface (30) of the cavity section (21) of the embodiment.

In the second variation of the embodiment, the center bridge (114) is omitted. The radially outer wall surface of the radially outermost one of the partition walls (112) serves as part of the outer circumferential surface of the rotor core (11). Thus, the part of the outer circumferential surface of the rotor core (11) is recessed in an arc shape raised toward the rotation center (Q) of the rotor core (11).

### (Third Variation of Embodiment)

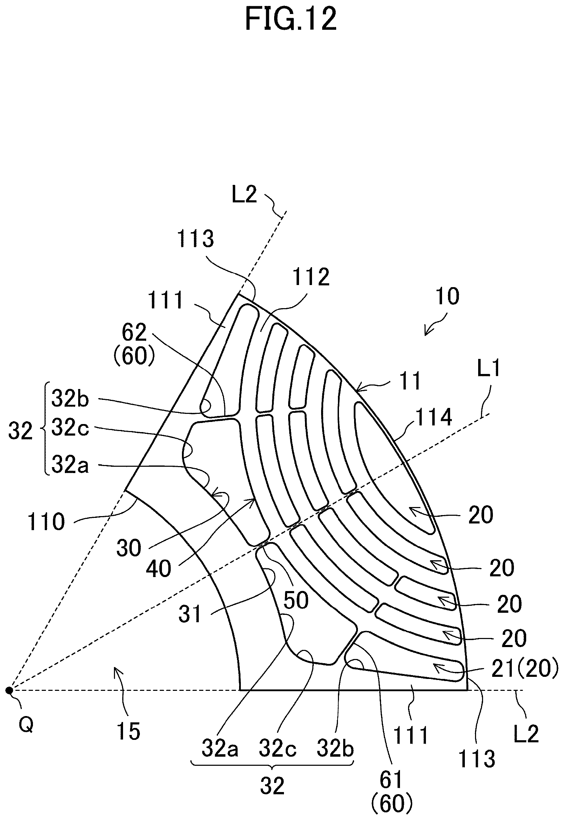

FIG. 12 shows an exemplary configuration of a main part of a rotor (10) of a third variation of the embodiment. The rotor (10) of the third variation of the embodiment is different in the number of magnetic poles of the rotor core (11) from the rotor (10) of the embodiment. The other configurations of the rotor (10) of the third variation of the embodiment are the same as those of the rotor (10) of the embodiment.

In the third variation of the embodiment, the number of magnetic poles of the rotor core (11) is "six". For the rotor core (11), six first reference lines (L1) which are in one-to-one correspondence with six magnetic poles of the rotor core (11) and six second reference lines (L2) which are in one-to-one correspondence with six boundaries of the magnetic poles of the rotor core (11) are defined. The angle between the first reference line (L1) and the second reference line (L2) adjacent to the first reference line (L1) in the circumferential direction is 30° (=180°/6).

### (Fourth Variation of Embodiment)

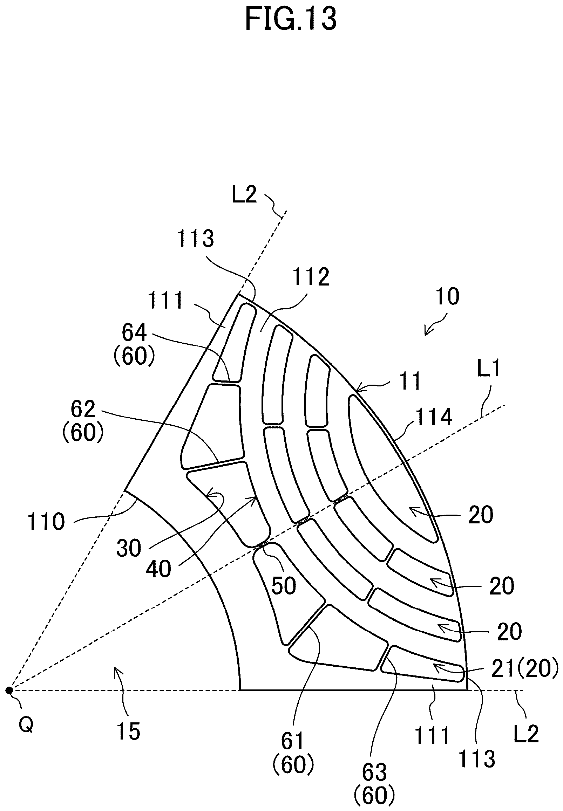

FIG. 13 shows an exemplary configuration of a main part of a rotor (10) of a fourth variation of the embodiment. The rotor (10) of the fourth variation of the embodiment is different in the number of cavity sections (20) provided for each magnetic pole of the rotor core (11) and different in the internal structure of the cavity section (21) from the rotor (10) of the third variation of the embodiment. The other configurations of the rotor (10) of the fourth variation of the embodiment are the same as those of the rotor (10) of the third variation of the embodiment.

In the fourth variation of the embodiment, four cavity sections (20) arranged in the radial direction are provided for each magnetic pole of the rotor core (11). Specifically, three partition walls (112) arranged in the radial direction are provided for each magnetic pole of the rotor core (11). In the radially inner side of the first partition wall (112), a cavity section (21), which is the first one of the cavity sections (20), is formed; between the second and third one of the cavity sections (20), the first to third ones of the partition walls (112) are formed; and between the third one of the partition walls (112) and the center bridge (114), the fourth one of the cavity sections (20) is formed.

In the fourth variation of the embodiment, the cavity section (21) is provided with four reinforcing ribs (60). Hereinafter, among the four reinforcing ribs (60), one of the two reinforcing ribs (60) except the first rib (61) and the second rib (62) will be referred to as a "third rib (63)," and the other one of the two reinforcing ribs (60) will be referred to as a "fourth rib (64)."

The third rib (63) is provided between the first rib (61) and one end of the cavity section (21) in the circumferential direction. The fourth rib (64) is provided between the second rib (62) and the other end of the cavity section (21) in the circumferential direction. The fourth rib (64) is line-symmetric to the third rib (63) with respect to the first reference line (L1).

### (Compressor)

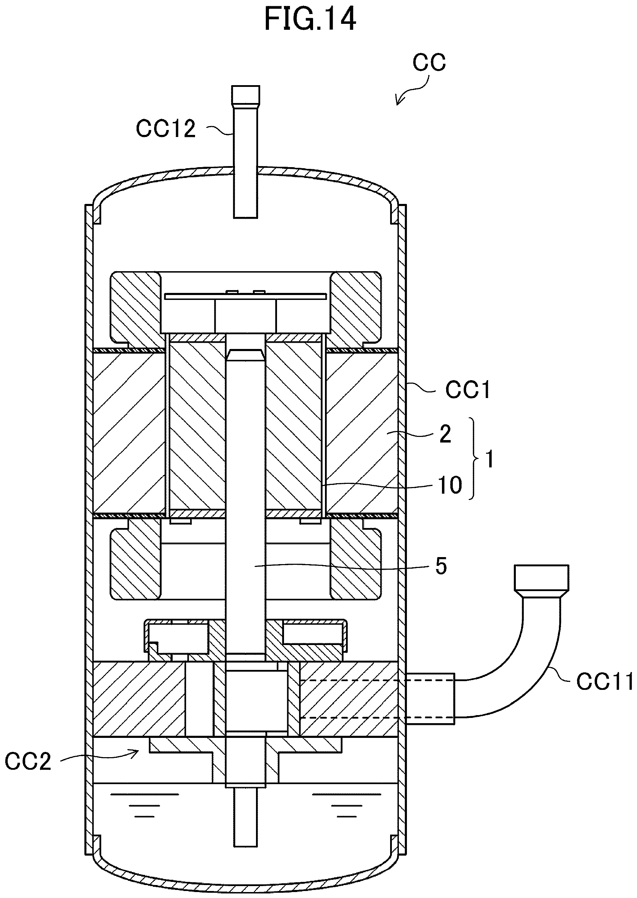

FIG. 14 shows an exemplary configuration of a compressor (CC). The compressor (CC) includes the motor (1), a casing (CC1), and a compression mechanism (CC2).

The casing (CC1) houses the compression mechanism (CC2) and the motor (1). In this example, the casing (CC1) is formed in a cylindrical shape extending in the vertical direction and formed with both ends closed. The casing (CC1) is provided with a suction pipe (CC11) and a discharge pipe (CC12). The suction pipe (CC11) penetrates the barrel of the casing (CC1) and is connected to the compression mechanism (CC2). The discharge pipe (CC12) penetrates the upper portion of the casing (CC1) and communicates with the internal space of the casing (CC1).

The compression mechanism (CC2) compresses a fluid. In this example, the compression mechanism (CC2) is disposed below the motor (1). The compression mechanism (CC2) compresses a fluid sucked through the suction pipe (CC11) and discharges the compressed fluid into the internal space of the casing (CC1). The fluid discharged into the internal space of the casing (CC1) is discharged through the discharge pipe (CC12). In this example, the compression mechanism (CC2) is a rotary compression mechanism.

The shaft (5) connects the motor (1) and the compression mechanism (CC2). In this example, the shaft (5) extends in the vertical direction. The motor (1) rotationally drives the shaft (5). By the shaft (5) being rotationally driven, the compression mechanism (CC2) is driven.

The compressor (CC) is not limited to a rotary compressor. The compressor (CC) may be a compressor of swing type, scroll type, screw type, turbo type, or any other type.

### (Refrigeration Apparatus)

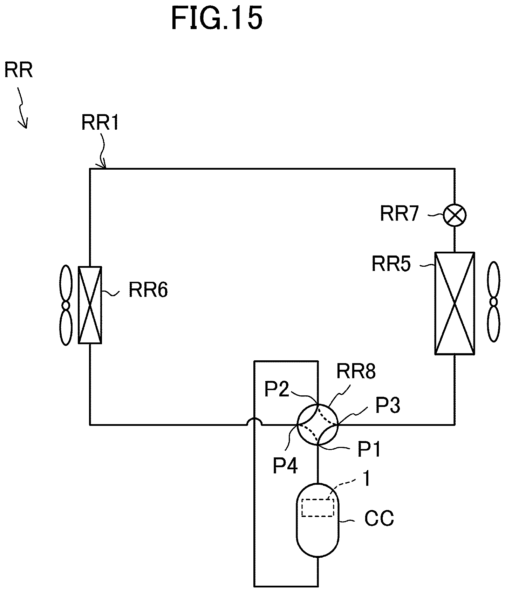

FIG. 15 shows an exemplary configuration of a refrigeration apparatus (RR). The refrigeration apparatus (RR) includes a refrigerant circuit (RR1) in which refrigerant circulates. Specifically, the refrigerant circuit (RR1) includes a compressor (CC) having the motor (1), a first heat exchanger (RR5), a second heat exchanger (RR6), an expansion mechanism (RR7), and a four-way switching valve (RR8). In this example, the expansion mechanism (RR7) is an electronic expansion valve. The refrigerant circuit (RR1) performs a vapor compression refrigeration cycle. For example, the first heat exchanger (RR5) is a heat source heat exchanger, and is provided in an outdoor space. The second heat exchanger (RR6) is a utilization heat exchanger, and is provided in an indoor space.

The discharge side of the compressor (CC) is connected to a first port (P1) of the four-way switching valve (RR8). The suction side of the compressor (CC) is connected to a second port (P2) of the four-way switching valve (RR8). The gas end of the first heat exchanger (RR5) is connected to a third port (P3) of the four-way switching valve (RR8). The liquid end of the first heat exchanger (RR5) is connected to the liquid end of the second heat exchanger (RR6) via the expansion mechanism (RR7). The gas end of the second heat exchanger (RR6) is connected to a fourth port (P4) of the four-way switching valve (RR8).

The four-way switching valve (RR8) can switch between a first state (indicated by solid lines in FIG. 15) in which the first port (P1) communicates with the third port (P3) and in which the second port (P2) communicates with the fourth port (P4), and a second state (indicated by broken lines in FIG. 15) in which the first port (P1) communicates with the fourth port (P4) and in which the second port (P2) communicates with the third port (P3).

When the four-way switching valve (RR8) is in the first state, the refrigerant discharged from the compressor (CC) dissipates heat in the first heat exchanger (RR5), then is decompressed in the expansion mechanism (RR7), and then absorbs heat in the second heat exchanger (RR6). The refrigerant having flowed out of the second heat exchanger (RR6) is sucked into the compressor (CC).

When the four-way switching valve (RR8) is in the second state, the refrigerant discharged from the compressor (CC) dissipates heat in the second heat exchanger (RR6), then is decompressed in the expansion mechanism (RR7), and then absorbs heat in the first heat exchanger (RR5). The refrigerant having flowed out of the first heat exchanger (RR5) is sucked into the compressor (CC).

For example, the refrigeration apparatus (RR) is an air conditioner that switches between cooling and heating. The refrigeration apparatus (RR) may be a cooling-dedicated unit or may be a heating-dedicated unit. In this case, in the refrigeration apparatus (RR), the four-way switching valve (RR8) may be omitted. The refrigeration apparatus (RR) may be a water heater, a chiller unit, or a cooling apparatus that cools air in an internal space. The cooling apparatus cools air in a refrigerator, a freezer, a container, or the like.

### (Force Acting on Reinforcing Rib)

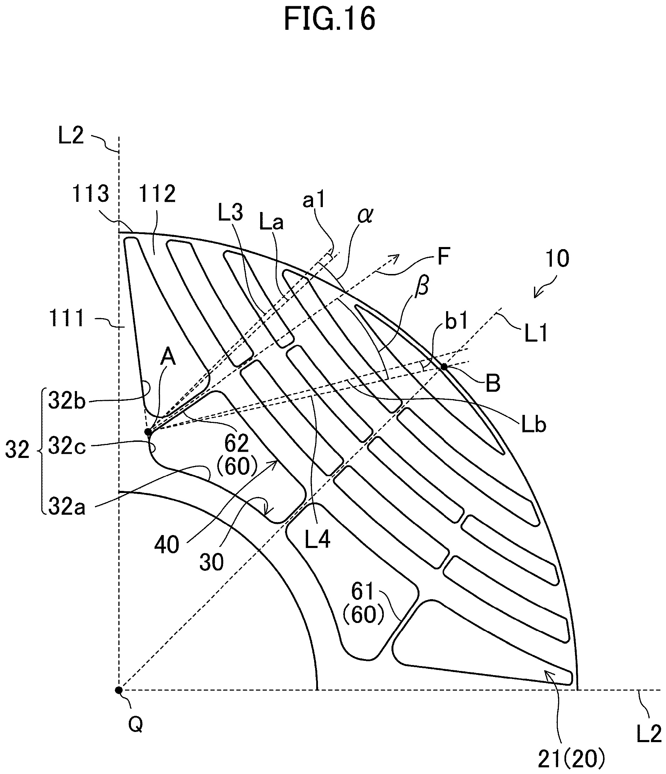

Next, the force acting on the reinforcing rib (60) while the rotor core (11) is rotating will be described with reference to FIG. 16. In the example of FIG. 16, a first rib (61) and a second rib (62) are provided as the reinforcing rib (60).

The force acting on the reinforcing rib (60) while the rotor core (11) is rotating varies with at least one of the centrifugal force, the electromagnetic force, or the torque acting on the rotor core (11). In this embodiment, the centrifugal force is dominant among the centrifugal force, the electromagnetic force, and the torque acting on the rotor core (11). From the forgoing, the force acting on the reinforcing rib (60) while the rotor core (11) is rotating can be regarded as "the force corresponding to at least the centrifugal force among the centrifugal force, the electromagnetic force, and the torque acting on the rotor core (11)." Note that the direction of the force acting on the reinforcing rib (60) does not necessarily match the direction of the force acting on the rotor core (11) (e.g., the total force of the centrifugal force, the electromagnetic force, and the torque).

### (Direction of Force Acting on Reinforcing Rib)

Next, the direction of the force acting on the reinforcing rib (60) while the rotor core (11) is rotating will be described with reference to FIGS. 16, 17, and 18.

In the following description, the intersection between the reinforcing rib (60) and the radially inner wall surface (30) of the cavity section (21) will be referred to as a "first intersection (A)," and the line extending from the first intersection (A) in the direction of the force acting on the first rib (61) while the rotor core (11) is rotating will be referred to as a "line (F) of action."

In the following description, the line that extends from the first intersection (A) in the direction parallel to the first reference line (L1) and that extends and is provided radially outward of the radially inner wall surface (30) of the cavity section (21) will be referred to as a "first imaginary line (L3)." The intersection between the first reference line (L1) and the outer circumferential edge of the rotor core (11) will be referred to as a "second intersection (B)," and the line extending from the first intersection (A) and passing through the second intersection (B) will be referred to as a "second imaginary line (L4)."

The line (F) of action is a line indicating the direction of the force acting on the first rib (61) from the first intersection (A) while the rotor core (11) is rotating. The linear part of the reinforcing rib (60) extends along the line (F) of action from the radially inner side of the cavity section (21) to the radially outer side of the cavity section (21).

As the electromagnetic force acting on the rotor core (11) increases, the line (F) of action tends to be inclined in the direction opposite to the rotational direction of the rotor core (11) (i.e., the counterclockwise direction in the example of FIG. 16). This tendency becomes more significant as the centrifugal force acting on the rotor core (11) decreases.

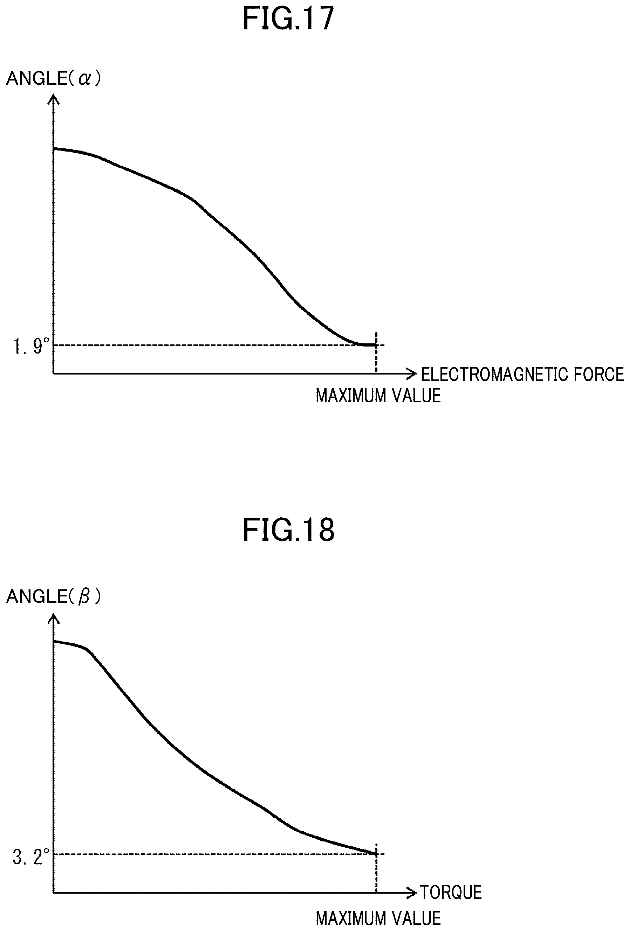

As shown in FIG. 17, as the electromagnetic force acting on the rotor core (11) increases, the angle (α) from the first imaginary line (L3) to the line (F) of action gradually decreases, and the line (F) of action gradually approaches the first imaginary line (L3). When the rotor core (11) is magnetically saturated, the electromagnetic force acting on the rotor core (11) is maximized, where the angle (α) is "1.9°."

The example of FIG. 17 shows the relationship between the angle (α) and the electromagnetic force where the rotational speed of the rotor (10) is 10% of the maximum value. The angle (α) at which the electromagnetic force acting on the rotor core (11) is maximized varies with the number of magnetic poles of the rotor core (11). Specifically, if the number of magnetic poles of the rotor core (11) is "n," the angle (α) at which the electromagnetic force acting on the rotor core (11) is maximized is "1.9°×4/n".

As the torque acting on the rotor core (11) increases, the line (F) of action tends to be inclined in the rotational direction of the rotor core (11) (i.e., the clockwise direction in the example of FIG. 16). This tendency becomes more significant as the centrifugal force acting on the rotor core (11) decreases.

As shown in FIG. 18, as the torque acting on the rotor core (11) increases, the angle (β) from the second imaginary line (L4) to the line (F) of action gradually decreases, and the line (F) of action gradually approaches the second imaginary line (L4). When the rotor core (11) is magnetically saturated, the torque acting on the rotor core (11) is maximized, where the angle (β) is "3.2°".

The example of FIG. 18 shows the relationship between the angle (β) and the torque where the rotational speed of the rotor (10) is 10% of the maximum value. The angle (β) at which the torque acting on the rotor core (11) is maximized varies with the number of magnetic poles of the rotor core (11). Specifically, when the number of magnetic poles of the rotor core (11) is "n," the angle (β) at which the torque acting on the rotor core (11) is maximized is "3.2°×4/n".

From the foregoing, the line (F) of action can be regarded as "the line located in a second range that is located inward of a first range between the first imaginary line (L3) and the second imaginary line (L4)."

The second range is located between a third imaginary line (La) and a fourth imaginary line (Lb). The third imaginary line (La) is a line extending from the first intersection (A) and is located inward of the first imaginary line (L3) in the first range. The fourth imaginary line (Lb) is a line extending from the first intersection (A) and is located inward of the second imaginary line (L4) in the first range. Specifically, the angle (a1) between the first imaginary line (L3) and the third imaginary line (La) is 1.9°×4/n, and the angle (b1) between the second imaginary line (L4) and the fourth imaginary line (Lb) is 3.2°×4/n. n represents the number of magnetic poles of the rotor core (11).

### (Other Embodiments)

In the above example, the motor (1) is a synchronous reluctance motor, but is not limited thereto. For example, the motor (1) may be a permanent magnet motor including a rotor (10) with permanent magnets. Specifically, permanent magnets may be inserted into the cavity sections (20) of the rotor (10).

The shape of the cavity section (21) is not limited to the shape described in the above description. Specifically, the shapes of the inner wall surface (30) and the outer wall surface (40) of the cavity section (21) are not limited to those described in the above description. The same applies to the cavity sections (20) except the cavity section (21) among the plurality of cavity sections (20) arranged in the radial direction.

For example, the side surface section (32) of the inner wall surface (30) of the cavity section (21) does not necessarily have the connecting surface section (32c). In other words, the flat surface section (32b) may be connected to the arc surface section (32a) without passing through the connecting surface section (32c). In addition, the side surface section (32) of the inner wall surface (30) of the cavity section (21) may have a curved surface section, instead of the flat surface section (32b), that is curved to be gradually closer to the second reference line (L2) as the distance to the radially outer side decreases. The central surface section (31) of the inner wall surface (30) of the cavity section (21) may be formed in a V-shape recessed with respect to the rotation center (Q) of the rotor core (11). The outer wall surface (40) of the cavity section (21) may be formed in a V-shape raised toward the rotation center (Q) of the rotor core (11) or may be in another shape.

While the embodiment and variations thereof have been described above, it will be understood that various changes in form and details may be made without departing from the spirit and scope of the claims. The elements according to the embodiment, the variations thereof, and the other embodiments may be combined and replaced with each other.

### INDUSTRIAL APPLICABILITY

As described above, the present disclosure is useful for a rotor, a motor, a compressor, and a refrigeration apparatus, and the like.

### DESCRIPTION OF REFERENCE CHARACTERS

- 1: Motor
- 10: Rotor
- 11: Rotor Core
- 20: Cavity Section
- 21: Cavity Section
- 30: Inner Wall Surface (Radially Inner Wall Surface of Cavity Section)
- 31: Central Surface Section
- 32: Side Surface Section
- 32a: Arc Surface Section
- 32b: Flat Surface Section
- 32c: Connecting Surface Section
- 40: Outer Wall Surface (Radially Outer Wall Surface of Cavity Section)
- 50: Center Rib
- 60: Reinforcing Rib
- 61: First Rib
- 62: Second Rib
- 63: Third Rib
- 64: Fourth Rib
- 110: Base
- 111: Salient Pole
- 112: Partition Wall
- 113: Side Bridge
- 114: Center Bridge
- CC: Compressor
- RR: Refrigeration Apparatus

## Claims

1. A rotor comprising:
a rotor core (11) that has a shaft hole (15) and that has a cavity section (21) provided for each magnetic pole and having a cavity,
wherein
a central surface section (31) of a radially inner wall surface (30) of the cavity section (21) is recessed with respect to a rotation center (Q) of the rotor core (11), where the central surface section (31) includes a vicinity of a first reference line (L1) that bisects an angle between two lines, one of which connects the rotation center (Q) of the rotor core (11) and one of circumferential ends of the cavity section (21), and another one of which connects the rotation center (Q) of the rotor core (11) and another one of the circumferential ends of the cavity section (21), and
a side surface section (32) of the radially inner wall surface (30) of the cavity section (21) is raised toward an intersection (X) between a second reference line (L2) and a wall surface of the shaft hole (15), where the side surface section (32) extends from the central surface section (31) to the circumferential end of the cavity section (21), where the second reference line (L2) is a reference line extending in a radial direction from the rotation center (Q) of the rotor core (11) and forms an angle with the first reference line (L1), and where the angle is obtained by dividing 180° by the number of magnetic poles of the rotor core (11).

2. The rotor of claim 1, wherein
a radially outer wall surface (40) of the cavity section (21) is formed in an arc shape raised toward the rotation center (Q) of the rotor core (11), and
the radially inner wall surface (30) of the cavity section (21) includes a portion in which a cavity width (W1), a distance between the radially inner wall surface (30) and the radially outer wall surface (40) of the cavity section (21), is longer than the cavity width (W1) at the vicinity of the first reference line (L1) of the radially inner wall surface (30) of the cavity section (21).

3. The rotor of claim 1 or 2, wherein
the central surface section (31) of the radially inner wall surface (30) of the cavity section (21) includes a portion having a center of curvature that is radially inward of the radially inner wall surface (30) of the cavity section (21), and
the side surface section (32) of the radially inner wall surface (30) of the cavity section (21) includes a portion having a center of curvature that is radially outward of the radially inner wall surface (30) of the cavity section (21).

4. The rotor of any one of claims 1 to 3, wherein
the side surface section (32) of the radially inner wall surface (30) of the cavity section (21) includes a flat surface section (32b) extending along the second reference line (L2).

5. The rotor of any one of claims 1 to 4, wherein
the central surface section (31) of the radially inner wall surface (30) of the cavity section (21) curves along the wall surface of the shaft hole (15).

6. The rotor of any one of claims 1 to 5, wherein
the cavity of the cavity section (21) includes a plurality of cavities,
the first reference line (L1) bisects an angle between two lines, one of which connects the rotation center (Q) of the rotor core (11) and one of circumferential ends of a set of the plurality of cavities of the cavity section (21), and another one of which connects the rotation center (Q) of the rotor core (11) and another one of the circumferential ends of the set of the plurality of cavities of the cavity section (21),
the rotor core (11) includes a reinforcing rib (60) between one of the plurality cavities of the cavity section (21) and another one of the plurality of cavities adjacent to the one of the plurality of cavities in a circumferential direction, where the reinforcing rib (60) extends from a radially inner side of the cavity section (21) to a radially outer side of the cavity section (21), and
the reinforcing rib (60) is provided not to be on the first reference line (L1), and includes a linear part extending from the radially inner side of the cavity section (21) to the radially outer side of the cavity section (21) in a direction of a force acting on the reinforcing rib (60) while the rotor core (11) is rotating.

7. A rotor comprising:
a rotor core (11) that has a shaft hole (15) and that has a cavity section (21) provided for each magnetic pole and having a cavity,
wherein
a central surface section (31) of a radially inner wall surface (30) of the cavity section (21) includes a portion having a center of curvature that is radially inward of the radially inner wall surface (30) of the cavity section (21), where the central surface section (31) includes a vicinity of a first reference line (L1) that bisects an angle between two lines, one of which connects the rotation center (Q) of the rotor core (11) and one of circumferential ends of the cavity section (21), and another one of which connects the rotation center (Q) of the rotor core (11) and another one of the circumferential ends of the cavity section (21), and
a side surface section (32) of the radially inner wall surface (30) of the cavity section (21) includes a portion having a center of curvature that is radially outward of the radially inner wall surface (30) of the cavity section (21), where the side surface section (32) extends from the central surface section (31) to the circumferential end of the cavity section (21).

8. A rotor comprising:
a rotor core (11) that has a shaft hole (15) and that has a cavity section (21) provided for each magnetic pole and having a cavity,
wherein
a central surface section (31) of a radially inner wall surface (30) of the cavity section (21) is recessed with respect to a rotation center (Q) of the rotor core (11), where the central surface section (31) includes a vicinity of a first reference line (L1) that bisects an angle between two lines, one of which connects the rotation center (Q) of the rotor core (11) and one of circumferential ends of the cavity section (21), and another one of which connects the rotation center (Q) of the rotor core (11) and another one of the circumferential ends of the cavity section (21), and
a side surface section (32) of the radially inner wall surface (30) of the cavity section (21) includes a flat surface section (32b) extending along a second reference line (L2), where the side surface section (32) extends from the central surface section (31) to the circumferential end of the cavity section (21), where the second reference line (L2) is a reference line extending in a radial direction from the rotation center (Q) of the rotor core (11) and forms an angle with the first reference line (L1), and where the angle is obtained by dividing 180° by the number of magnetic poles of the rotor core (11).

9. A motor comprising the rotor of any one of claims 1 to 8.

10. A compressor comprising the motor of claim 9.

11. A refrigeration apparatus comprising the compressor of claim 10.
